# EUROPÄISCHE PATENTANMELDUNG

(11) **EP 4 512 228 A1**
(43) Veröffentlichungstag der Anmeldung: **26.02.2025**
(21) Anmeldenummer: 23192784.9
(22) Anmeldetag: 22.08.2023
(51) Int. Cl.: A01D 80/02

(54) **BANDRECHEN**

(71) Anmelder: Rahm, Andreas, 6277 Zellberg (AT)
(72) Erfinder: Rahm, Andreas, 6277 Zellberg (AT)
(74) Vertreter: Schwarz & Partner Patentanwälte GmbH

(57) **Zusammenfassung**

Fahrbarer Bandrechen (1), umfassend zumindest zwei Drehwellen (4), wobei die Drehachsen (D) der Drehwellen (4) entlang der Fahrtrichtung (F) des Bandrechens (1) ausgerichtet sind, zumindest ein Endlosband (2), wobei das Endlosband (2) um die zwei Drehwellen (4) drehbar gelagert ist, mehrere Zinken (6), wobei die Zinken (6) an Zinkenhaltern (8) befestigt sind, Zinkenträger (9), mit denen die Zinkenhalter (8) am Endlosband (2) befestigt sind, wobei die Zinkenträger (9) jeweils eine Arretiervorrichtung (12) aufweisen, mit welcher im arretierten Zustand der jeweilige Zinkenhalter (8) die am Zinkenhalter (8) befestigten Zinken (6) in einer aufrechten Position arretiert, sodass sie an der Außenseite des Endlosbands (2) abstehen, wobei an zumindest einer Drehwelle (4) eine Auslösevorrichtung (14) für die Arretiervorrichtung (12) vorgesehen ist, mit welcher die Arretiervorrichtung (12) lösbar ist sodass mit den Zinkenhaltern (8) die Zinken (6) in eine an das Endlosband angelegte Position überführbar sind.

## Beschreibung

Die vorliegende Erfindung betrifft einen Bandrechen, umfassend zumindest zwei Drehwellen, wobei die Drehachsen der Drehwellen entlang der Fahrtrichtung des Bandrechens ausgerichtet sind, zumindest ein Endlosband, wobei das Endlosband um die zwei Drehwellen drehbar gelagert ist, mehrere Zinken, wobei die Zinken an Zinkenhaltern befestigt sind, Zinkenträger, mit denen die Zinkenhalter am Endlosband befestigt sind.

### HINTERGRUND DER ERFINDUNG

Ein Bandrechen der eingangs genannten Gattung wird z.B. in AT 260 599 B offenbart. Mit einem solchen Bandrechen kann geschnittenes Heu, welches am Untergrund liegt, mit den Zinken seitlich vom Bandrechen abgelegt werden. Das Heu kann durch den Bandrechen entweder nur zum Lüften gewendet oder als Schwad seitlich abgelegt werden. Dabei kann das Heu nur auf einer Seite des Bandrechens abgelegt werden.

Die Zinken des Bandrechens stehen in einen annähernd rechten Winkel vom Endlosband ab, um das Heu ideal aufgreifen zu können. Beim Umlaufen des Endlosbands um die Drehwellen müssen die Zinken allerdings abschnittsweise angelegt werden, da sonst das Heu seitlich nicht korrekt abgelegt werden kann und gegebenenfalls wieder mitgeführt wird.

Der Stand der Technik benötigt zum Anlegen der Zinken aufwändige Mechanismen. Darüber hinaus ist mit den bekannten Anlegemechanismen für die Zinken kein Wechsel der Drehrichtung der Drehwellen möglich. Ein Ändern der Drehrichtung der Drehwellen ist jedoch erforderlich, um den Bandrechen in einem Gelände mit Gefälle verwenden zu können. Je nach Gefälle des Geländes und Betriebsrichtung des Bandrechens muss die Drehrichtung der Drehwellen so geändert werden, dass das Endlosband das Heu auf der Talseite ablegt. Da dies beim Stand der Technik nicht ohne aufwändigen Umbau möglich ist, muss bei der Bedienung der Bandrechen vor- und rückwärts bedient werden, was umständlich ist und bei Hanglangen zusätzliche Gefahrensituationen hervorruft, da beim Rückwärtsgehen die Kontrolle über den Bandrechen verloren gehen kann. Auch besteht beim Rückwärtsgehen der Nachteil, dass man über das bereits trockene, rutschige Heu gehen muss, was zu Unfällen führen kann und die Qualität des Heus als Futter durch das Überfahren mit der Zugmaschine beeinträchtigen kann.

### KURZBESCHREIBUNG DER ERFINDUNG

Aufgabe der vorliegenden Erfindung ist die Bereitstellung eines Bandrechens, mit dem die genannten Nachteile vermieden werden. Gelöst wird diese Aufgabe durch einen fahrbaren Bandrechen, umfassend
- zumindest zwei Drehwellen, wobei die Drehachsen der Drehwellen entlang der Fahrtrichtung des Bandrechens ausgerichtet sind,
- zumindest ein Endlosband, wobei das Endlosband um die zwei Drehwellen drehbar gelagert ist,
- mehrere Zinken, wobei die Zinken an Zinkenhaltern befestigt sind,
- Zinkenträger, mit denen die Zinkenhalter am Endlosband befestigt sind, dadurch gekennzeichnet, dass

die Zinkenträger jeweils eine Arretiervorrichtung aufweisen, mit welcher im arretierten Zustand der jeweilige Zinkenhalter die am Zinkenhalter befestigten Zinken in einer aufrechten Position arretiert, sodass sie an der Außenseite des Endlosbands abstehen,
wobei an zumindest einer Drehwelle eine Auslösevorrichtung für die Arretiervorrichtung vorgesehen ist, mit welcher die Arretiervorrichtung lösbar ist, sodass mit den Zinkenhaltern die Zinken in eine an das Endlosband angelegte Position überführbar sind.

Indem die Zinkenträger jeweils eine Arretiervorrichtung aufweisen, kann der Zinkenhalter in einer arretierten Position gehalten werden, in welcher die Zinken aufrecht ausgerichtet sind und von der Außenseite des Endlosbands abstehen. Die Auslösevorrichtung greift, wenn die Drehwelle in der passenden Position ist, zum Auslösen in die Arretiervorrichtung ein. Dadurch wird der jeweilige Zinkenhalter in eine gelöste Position gebracht. In der gelösten Position wird die Neigung der Zinken zum Endlosband verringert, bis sie am Endlosband anliegen.

Die Zinken werden so beim Umlaufen um die Drehwelle automatisiert durch die Auslösevorrichtung, die an der Drehwelle angeordnet ist, angelegt. So wird einerseits das Heu richtig aufgenommen und in gewünschter Weise abgelegt. Andererseits kann jederzeit die Drehrichtung der Drehwelle geändert werden, ohne dass es zu Problemen mit abstehenden Zinken kommt. Bevorzugt sind an beiden Drehwellen Auslösevorrichtungen angebracht.

Bevorzugt ist vorgesehen, dass die Arretiervorrichtung derart ausgebildet ist, dass sie selbsttätig in den arretierten Zustand übergeht, wenn die Auslösevorrichtung von der Arretiervorrichtung gelöst wird. Die Arretiervorrichtung ist also derart ausgebildet, dass sich die Arretiervorrichtung nur solange im gelösten Zustand befindet, solange die Auslösevorrichtung mit der Arretiervorrichtung in Eingriff steht. Sobald die Auslösevorrichtung nicht mit der Arretiervorrichtung in Eingriff steht, geht die Arretiervorrichtung in den arretierten Zustand über.

In einer bevorzugten Ausführungsform ist vorgesehen, dass die Arretiervorrichtung im arretierten Zustand den Zinkenhalter mittels einer Druckfeder im Zinkenträger arretiert, wobei die Auslösevorrichtung eine Exzenterscheibe umfasst, die an der Drehwelle angeordnet ist und die mit einem Zapfen am Zinkenträger in Eingriff bringbar ist und dabei die Druckfeder drückt.

Ein Zapfen kann auf einfache Weise mit einer Druckfeder, die den Zinkenhalter am Zinkenträger arretiert, gekoppelt werden. Wenn der Zapfen von der Auslösevorrichtung mit Kraft beaufschlagt wird, drückt der Zapfen die Druckfeder zusammen und spannt diese, sodass der Zinkenhalter, der im arretierten Zustand durch die ungedrückte Druckfeder gehalten wird, in einen nicht arretierten Zustand gebracht wird. Eine geeignete Auslösevorrichtung für diesen Zweck ist eine Exzenterscheibe, die einfach an der Drehwelle am Bandrechen eingebaut werden kann. Durch die Interaktion von Exzenterscheibe - Zapfen - Druckfeder erfolgt das Lösen der Arretierung des Zinkenhalters am Zinkenträger.

Weiters kann vorgesehen sein, dass der Zinkenhalter eine Nocke aufweist, wobei die Nocke im gelösten Zustand entlang einer Führung in der Arretiervorrichtung bewegbar ist, wobei die Nocke im arretierten Zustand in einer Nut formschlüssig einrastbar ist. Solange die Exzenterscheibe über den Zapfen die Druckfeder spannt, bleibt der Zinkenhalter im nicht arretierten Zustand. Die Führung hält den Zapfen im angelegten Zustand. Wenn aber die Exzenterscheibe mit dem Zapfen nicht mehr interagiert, geht die Druckfeder wieder in den ursprünglichen Zustand zurück. Dadurch wird die Nocke in die Nut gedrückt, wo sie einrastet. Der Zinkenhalter richtet die Zinken wieder auf.

Die Führung weist bevorzugt eine Krümmung, vorzugsweise eine annähernd kreissegmentförmige Krümmung, auf, mit der die Nocke so geführt wird, dass der Zinkenhalter über die Führung der Nocke angelegt wird und anschließend wieder aufgerichtet wird. Damit der Bandrechen fahrbar ist, sind vorzugsweise Gleitmittel vorgesehen. Die Gleitmittel können Kufen umfassen. Vorzugsweise umfassen die Gleitmitte zumindest zwei Räder, wobei die Drehachse der Räder senkrecht zur Fahrtrichtung des Bandrechens angeordnet ist.

Der Bandrechen kann einen externen Antrieb aufweisen bzw. an einen externen Antrieb gekoppelt werden (z.B. eine Zugmaschine) und so den Bandrechen bewegen und zusätzlich die Drehwellen antreiben.

Der Bandrechen kann aber auch selbst angetrieben sein, damit kann er sich selbständig fortbewegen und die Drehwellen drehen kann. Dazu kann der Bandrechen eine integrierte Antriebseinheit aufweisen. Weiters kann eine Lenkvorrichtung vorgesehen sein.

Weiters kann ein Seitenblech vorgesehen, welches seitlich des Endlosbands angeordnet ist. Dies ermöglicht generell eine bessere Ablage des Heus an der Seite. Bei entsprechender Anordnung kann mit einem solchen Seitenblech das Heu zu einer schmäleren Schwad abgelegt werden, was das Sammeln des Heus erleichtert.

Das Endlosband kann z.B. als Keilriemen ausgebildet sein. Bevorzugt sind zwei oder mehr voneinander beabstandete Endlosbänder vorgesehen. Das Endlosband bzw. die Endlosbänder können streifenförmig ausgebildet sein.

Aufgrund der hohen Kräfte, die am Endlosband und an den Drehwellen auftreten können, ist es vorteilhaft, wenn an der Drehwelle zwei beabstandete Exzenterscheiben und zwei beabstandete Zapfen am Zinkenträger vorgesehen sind. Das zweite paar Exzenterscheiben und zwei Zapfen am Zinkenträger agieren wie das erste paar und verbessern den Rundlauf um die Drehwellen. Damit können im Fall des Einsatzes von Druckfedern diese kleiner dimensioniert werden und die Kräfte auf das Endlosband werden verringert.

Die Zinken können außerdem eine Federung aufweisen. Dadurch können Unebenheiten am Untergrund ausgeglichen werden, ohne dass es zu einem Abbrechen der Zinken kommt. Bevorzugt sind die Zinken paarweise angeordnet, wobei die Zinken besonders bevorzugt über eine Feder oder Doppelfeder miteinander verbunden sind.

### DETAILLIERTE BESCHREIBUNG DER ERFINDUNG

Details und Vorteile der Erfindung werden anhand der Figuren und der Figurenbeschreibung erläutert.
- Fig. 1a bis 1c: zeigen einen erfindungsgemäßen Bandrechen in einer Ansicht von vorne (Fig. 1a), von oben (Fig. 1b) und von der Seite (Fig. 1c).
- Fig. 2a und 2b: zeigen das Endlosband und die Drehwelle des Bandrechens der Fig. 1a bis 1c im Detail mit einer Ansicht von vorne (Fig. 2a) und im Schnitt entlang I-I.
- Fig. 3a und 3b: zeigen in Fig. 3a eine Detailansicht einer Drehwelle aus Fig. 2a und in Fig. 3b eine vergrößerte Ansicht der Fig. 2b.
- Fig. 4: zeigt eine Schnittansicht entlang der Achse A-A von Fig. 2b in Pfeilrichtung.
- Fig. 5: zeigt eine Schnittansicht entlang der Achse B-B von Fig. 2b in Pfeilrichtung.
- Fig. 6: zeigt schematisch mehrere Positionen des Zinkens mit Zinkenhalter während eines Umlaufs der beiden um eine Drehwelle
- Fig. 7a und 7b: zeigen den Zinkenträger mit Zinkenhalter und Arretiervorrichtung in zwei Ansichten.
- Fig. 8a bis 8c: zeigen Elemente der Arretiervorrichtung
- Fig. 9: zeigt eine Explosionsdarstellung von Zinkenträger mit Zinkenhalter und Arretiervorrichtung

Alle Figuren beziehen sich auf dasselbe Ausführungsbeispiel, welches folglich anhand aller Figuren gemeinsam beschrieben wird. Gleiche Bauteile werden mit gleichen Bezugszeichen versehen und es wird davon abgesehen, zu jeder Figur sämtliche Bauteile noch einmal zu beschreiben, wenn diese Bauteile bereits zu einer vorherigen Figure erläutert wurden. Auch sind aus Gründen der Übersichtlichkeit nicht alle Bauteile in allen Figuren mit Bezugszeichen versehen.

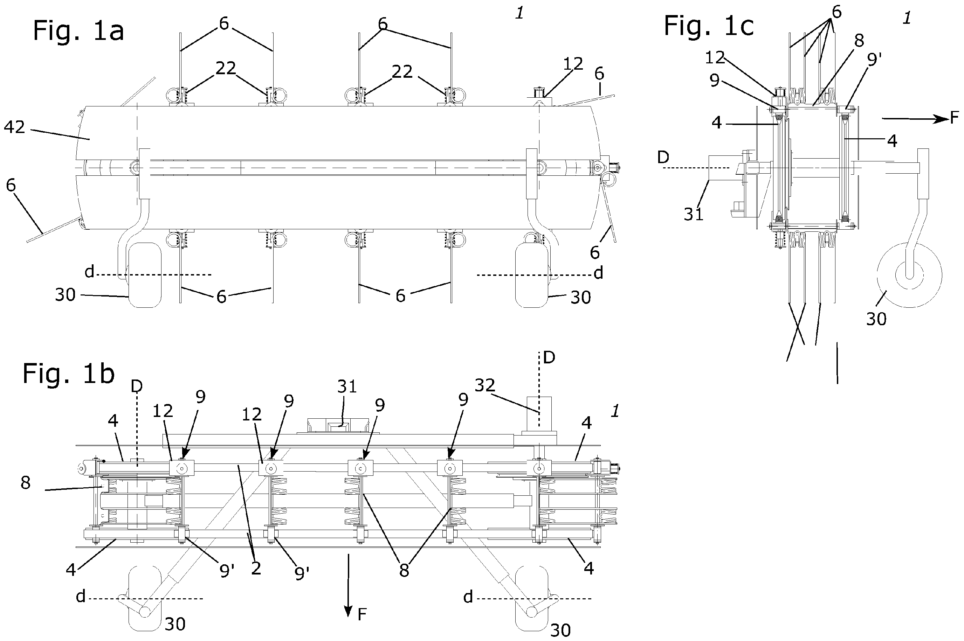

Dargestellt ist ein fahrbarer Bandrechen 1, der in den Fig. 1a bis 1c in seiner Gesamtheit dargestellt ist. Der Bandrechen 1 weist eine Fahrtrichtung F auf, in welche er im Normalbetrieb fahrbar ist. Für die Fahrbarkeit umfasst der Bandrechen 1 Gleitmittel in der Form von zwei Rädern 30 mit einer Drehachse d, wobei die zwei Räder 30 in diesem Fall auch lenkbar sind. Die Drehachsen d sind im Normalzustand des Bandrechens 1 senkrecht zur Fahrtrichtung F angeordnet. Im Ausführungsbeispiel ist der Bandrechen 1 extern angetrieben. Dazu wird der Bandrechen 1 über eine Kupplung 31 mit einer nicht gezeigten Zugmaschine gekoppelt.

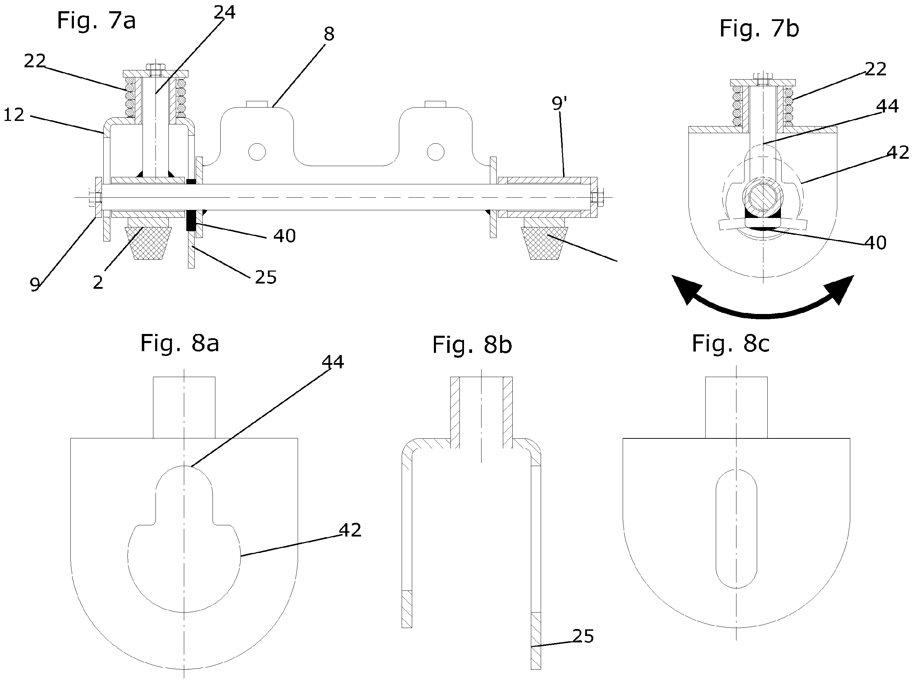

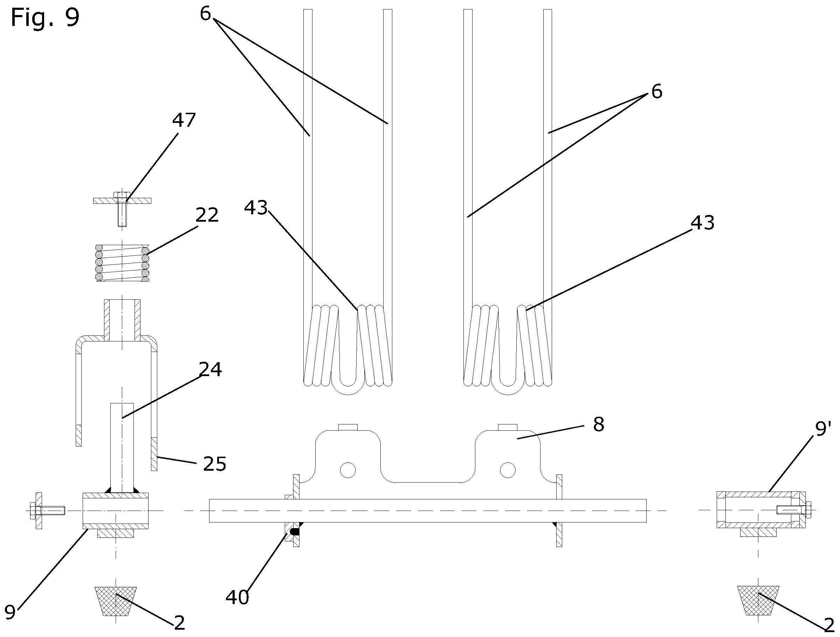

Im gezeigten Ausführungsbeispiel weist der Bandrechen 1 zwei Endlosbänder 2 auf, die über jeweils über zwei Drehwellen 4 geführt werden. Die Endlosbänder 2 sind als Keilriemen ausgebildet. Die Drehwellen 4 sind in diesem Fall also paarweise angeordnet. Allen Drehwellen 4 gemein ist, dass die Drehachsen D parallel zur Fahrtrichtung F angeordnet sind. Erkennbar sind außerdem mehrere Zinken 6, die an den Endlosbändern 2 um den Umfang verteilt sind. Im gezeigten Ausführungsbeispiel sind immer Paare an Zinken 6 vorgesehen, von denen jeweils ein Paar auf gleicher Höhe auf den Endlosbändern 2 über den Zinkenhalter 8 befestigt sind. Die Zinken 6 können aber auch einzeln angeordnet sein oder mehrere Zinkenpaare umfassen. Die Variante in den Figuren mit jeweils zwei Paaren auf zwei Endlosbändern 2 auf gleicher Höhe ist bevorzugt, da so die Rechenleistung optimal ist. Die Zinken 6 werden von Zinkenhaltern 8 gehalten, die in Fig. 7a und in Fig. 9 genauer dargestellt sind.

Zumindest einem der Drehwellen 4 ist ein Antrieb zugeordnet, der die Drehwelle 4 in Rotation versetzt. Im Ausführungsbeispiel ist hierfür eine Wellenkupplung 32 vorgesehen, die mit einem Antrieb der Zugmaschine gekoppelt ist. Allerdings kann auch ein anderer Antrieb, z.B. ein interner Antrieb mit einem Motor vorgesehen sein. Ein Paar der beiden Drehwellen 4 wird von der Zugmaschine über die Wellenkupplung 32 in Rotation versetzt, sodass die Drehwellen 4 und die Endlosbänder 2 in Drehbewegung versetzt werden. Wenn die Drehwellen 4 rotieren, laufen die Endlosbänder 2 in Rotationsrichtung des Antriebs um die Drehwellen 4 herum.

Die Drehachse D der beiden Drehwellen ist parallel zur Fahrtrichtung F (siehe auch Fig. 1b).

In Fig. 1b, einer Draufsicht auf den Bandrechen 1, sind die Zinkenträger 9 erkennbar, die auf dem Endlosband 2 fixiert sind. Die Zinkenträger 9 sind auf dem Endlosband 2 fixiert, wobei jeweils ein Zinkenträger 9 auf jeweils einem Endlosband 2 fixiert ist. Der in Fig. 1b jeweils am unteren Endlosband 2 fixierte Zinkenträger 9` hat die Funktion den Zinkenhalter 8 am Endlosband 2 zu fixieren und ein seitliches Abrutschen zu verhindern. Hinsichtlich der Lage ist der im Fig 1b jeweils oben gezeigte Zinkenträger 9 entscheidend, da dieser eine Arretiervorrichtung 12 aufweist. Zwischen den Zinkenträgern 9, 9` ist jeweils ein Zinkenhalter 8 aufgespannt, der wiederum zwei Paare Zinken 6 trägt.

Die Zinken 6 weisen eine Federung auf, um Unebenheiten am Untergrund auszugleichen. Dazu sind jeweils zwei Zinken 6 paarweise angeordnet und über eine Doppelfeder 43 miteinander verbunden.

Die Zinkenhalter 8 sind am Endlosband 2 über die Zinkenträger 9, 9` fixiert. In den nachfolgenden Schnittdarstellungen und Detailansichten ist auch die Funktionsweise der Arretiervorrichtung 12 für die Zinken 6 und die Auslösevorrichtung 14 für die Arretiervorrichtung 12 erläutert.

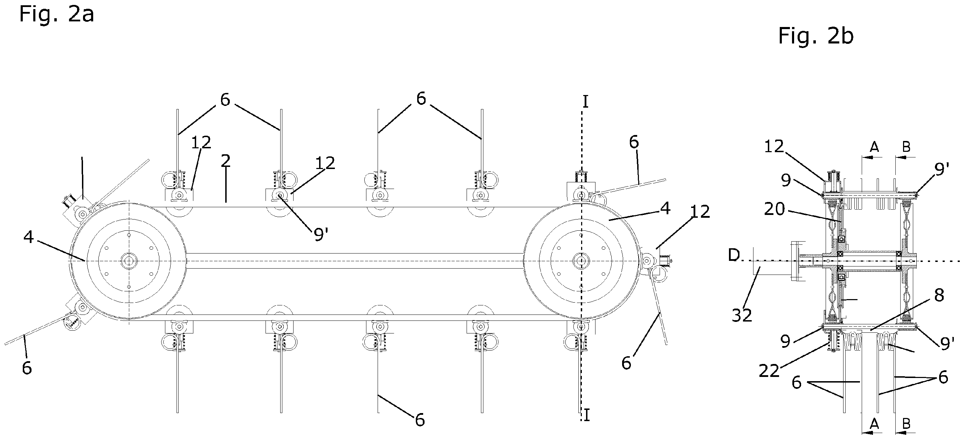

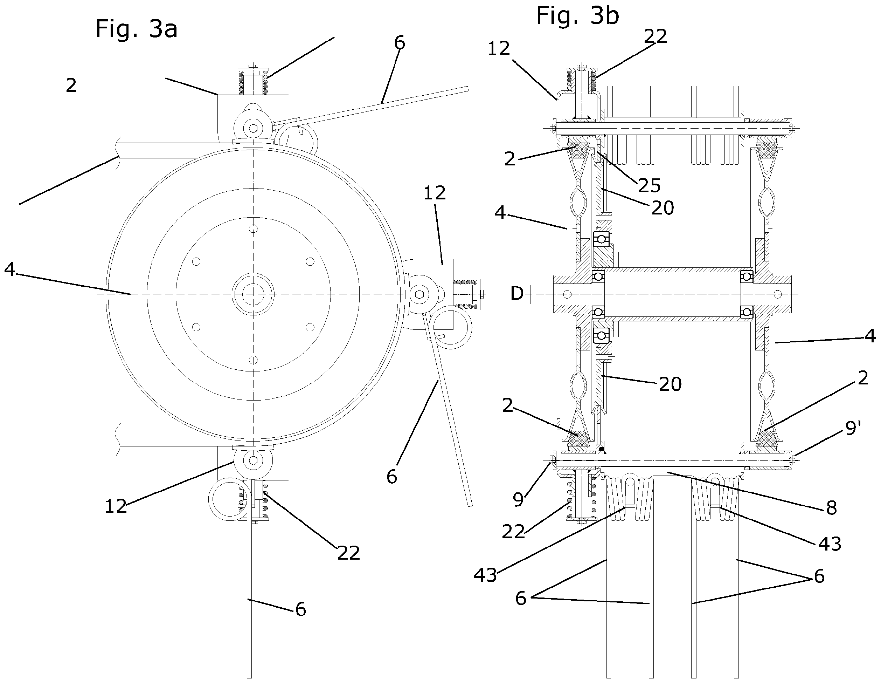

In den Fig. 1a bis 1c ist die Vorderseite des Bandrechens von einem Schutzblech 42 abgedeckt, die den Bereich der Drehwellen 4 und der Endlosbänder 2 abdeckt. In Fig. 2a ist der Bereich der Drehwellen 4 und der Endlosbänder 2 aus Fig. 1a ohne das Schutzblech 42 dargestellt. Fig. 2b zeigt einen Schnitt durch das in Fig. 2a rechts dargestellte Paar an Drehwellen 4 entlang der Achse I-I. Fig. 3a zeigt eine Detailansicht aus Fig. 2a im Bereich der rechten Drehwelle 4 und Fig. 3b eine Vergrößerung von Fig. 2b ohne Wellenkupplung 32. Die Auslösevorrichtung 14 wird von der Exzenterscheibe 20 in Verbindung mit der Drehwelle 4 gebildet.

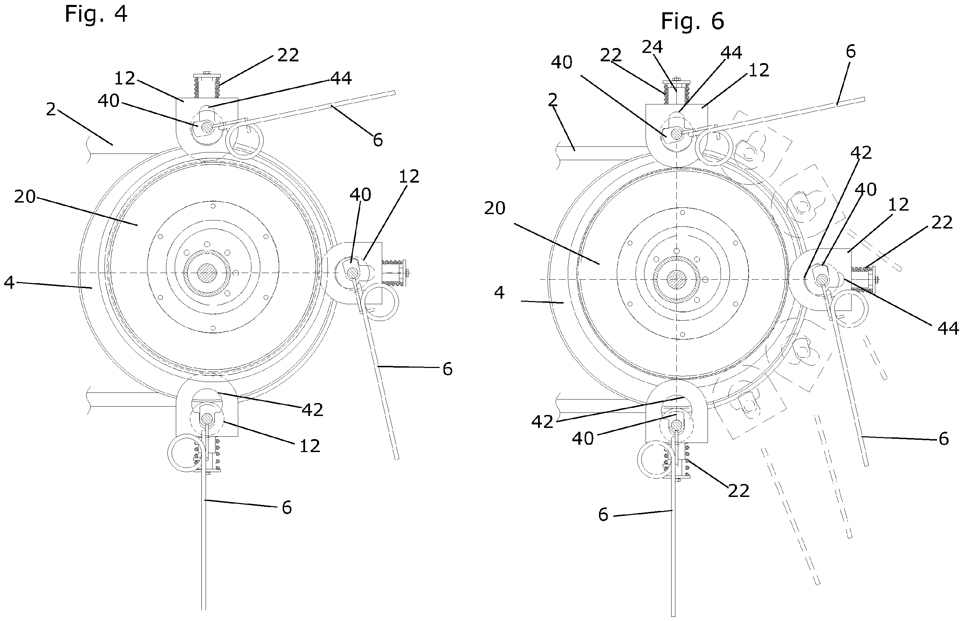

Fig. 4 zeigt einen Ausschnitt eines Schnitts entlang der Achse A-A von Fig. 2b in Pfeilrichtung. Deutlich erkennbar ist die mit Exzenterscheibe 20, die im Eingriff mit drei Arretiervorrichtungen 12 steht. Abhängig von der Position der Exzenterscheibe 20, Nocke 40 in der Führung 42 bzw. Nut 44 legen sich die Zinken 6 an und richten sich später wieder auf.

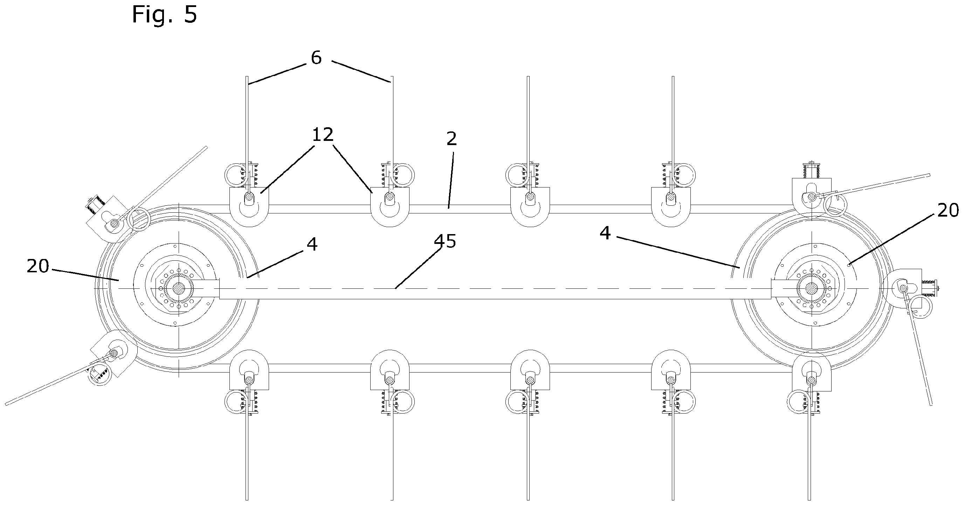

Fig. 5 zeigt einen Schnittansicht entlang der Achse B-B von Fig. 2b in Pfeilrichtung. Zusätzlich ist noch eine Verbindungsachse 45 zwischen den Drehwellen 4 gezeigt.

Der Zinkenhalter 8 - in Fig. 7a und 9 vergrößert dargestellt - weist zwei Fortsätze auf, an denen die Zinken 6 befestigt sind. Der Zinkenhalter 8 ist über die Zinkenträger 9, 9` am jeweiligen Endlosband 2 fixiert. An einem Zinkenträger 9 ist eine Arretiervorrichtung 12 vorgesehen. Die Arretiervorrichtung 12 hält im arretierten Zustand den Zinkenhalter 8 so, dass die am Zinkenhalter 8 befestigten Zinken 6 in einer aufrechten Position arretiert sind. Die Zinken 6 stehen an der Außenseite des Endlosbands 2 ab. In Fig. 1a sind dies z.B. die mittleren vier der oberen bzw. unteren Zinken 6.

Die Arretiervorrichtung 12 arretiert im arretierten Zustand den Zinkenhalter 8 mittels einer Druckfeder 22 am Zinkenträger 9. Der Zinkenhalter 8 weist eine Nocke 40 aufweist, wobei die Nocke 40 im gelösten Zustand entlang einer Führung 42 in der Arretiervorrichtung 12 bewegbar ist, wobei die Nocke 40 im arretierten Zustand in einer Nut 44 formschlüssig einrastbar ist.

Die Auslösevorrichtung 14 für die Arretiervorrichtung 12 ist an einer Drehwelle 4 angeordnet. Über die Auslösevorrichtung 14 wird die Arretiervorrichtung 12 vom arretierten in den gelösten Zustand überführt. Bei Drehung der Drehwellen 4 dreht sich das Endlosband 2. Sobald die Arretiervorrichtung 12 über die Drehwelle 4 geführt wird, greift die Auslösevorrichtung 14 in die Arretiervorrichtung 12 ein. Dazu ist an der Auslösevorrichtung 14 eine Exzenterscheibe 20 vorgesehen, im vorliegenden Fall eine kreisförmige Scheibe, die exzentrisch zur Drehwelle 4 angeordnet ist. Der Mittelpunkt der Exzenterscheibe 20 ist also versetzt zum Mittelpunkt (= Drehachse) der Drehwelle 4 angeordnet. Die Exzenterscheibe 20 greift an der Arretiervorrichtung 12 an einem dort angeordneter Zapfen 25 ein und drückt die Arretiervorrichtung 12 gegen die Druckfeder 22.

Die Nocke 40 am Zinkenhalter 8 wird im gelösten Zustand entlang einer Führung 42 in der Arretiervorrichtung 12 bewegt. Dadurch kann der Zinkenhalter 8 verschwenkt werden, sodass die Zinken 6 am Zinkenhalter 8 angelegt werden. Mit der Auslösevorrichtung 14 wird der Zinkenhalter 8 also von der arretierten Position in eine gelöste Position gebracht, wenn der Zinken 6 mit dem Endlosband 2 über die Drehwelle 4 geführt wird. Die Arretiervorrichtung 12 arretiert den Zinkenhalter 8 mittels einer Druckfeder 22 im Zinkenhalter 8. Die Auslösevorrichtung 14 umfasst eine Exzenterscheibe 20, die an der Drehwelle 4 angeordnet ist. Die Exzenterscheibe 20 wird mit einem Zapfen 25 am Zinkenträger 8 in Eingriff gebracht, woraufhin die Druckfeder 22 von einem normalen Zustand in einen gedrückten Zustand gedrückt wird. Die Druckfeder 22 ist als Spiralfeder ausgebildet und weist in der Achse der Spiralfeder einen Stift 24 auf, der die Druckfeder 22 entlang der Achse stabilisiert.

Sobald die Exzenterscheibe 20 nicht mehr an der Arretiervorrichtung 12 eingreift, d.h. den Kontakt mit dem Zapfen 25 löst, drückt die Druckfeder 22 die Arretiervorrichtung 12 in die Ausgangsposition zurück. Dadurch wird die Nocke 40 in die Nut 44 gedrängt, wo sie formschlüssig einrastet.

Die Arretiervorrichtung 12 ist also derart ausgebildet ist, dass sie selbsttätig in den arretierten Zustand übergeht, wenn die Auslösevorrichtung 14 von der Arretiervorrichtung 12 gelöst wird.

In Fig. 7a und 7b ist der Zinkenhalter 8 mit der Nocke 40 nochmals verdeutlicht, die im gelösten Zustand in einer Führung 42 in der Arretiervorrichtung 12 bewegbar ist. Im arretierten Zustand befindet sich die Nocke 40 formschlüssig in der Nut 44 und rastet dort ein. Die Nocke 40 wird dabei durch die Exzenterschreibe 20 in der Führung 42 so geführt, dass sie an der Nut 44 anlangt, sobald die Exzenterscheibe 20 nicht mehr mit dem Zapfen 25 interagiert. Die Druckfeder 22 drückt dann die Nocke 40 in die Nut 44, wo sie einrastet.

In Fig. 6 ist die Bewegung der Zinken 6 während einer Umdrehung um eine Drehwelle 4 analog Fig. 4 gezeigt. Neben den drei Zinkenträgern 9 mit Arretiervorrichtung 12 in ihrer Position am Endlosband 2 sind strichliert Zwischenpositionen eingezeichnet, welche zwischenzeitlich beim Umlaufen des Endlosbands 2 um die Drehwellen 4 eingenommen werden. Erkennbar ist deutlich, wie der obere Zinken 6 mit dem Zinkenhalter 8 über die Nocke 40 sich im gelösten Zustand befindet und bei Rotation der Drehwelle 4 in Drehrichtung (Pfeilrichtung) in einer Führung 42 in der Arretiervorrichtung 12 bewegt wird. Die Nocke 40 wird durch die Exzenterschreibe 20 in der Führung 42 so geführt, bis sie an der Nut 44 anlangt (unten), sobald die Exzenterscheibe 20 nicht mehr mit dem Zapfen 25 interagiert. Die Druckfeder 22 drückt dann die Nocke 40 in die Nut 44, wo sie einrastet. Im arretierten Zustand befindet sich die Nocke 40 formschlüssig in einer Nut 44 (unterster Zinken 6).

## Patentansprüche

1. Fahrbarer Bandrechen (1), umfassend
• zumindest zwei Drehwellen (4), wobei die Drehachsen (D) der Drehwellen (4) entlang der Fahrtrichtung (F) des Bandrechens (1) ausgerichtet sind,
• zumindest ein Endlosband (2), wobei das Endlosband (2) um die zwei Drehwellen (4) drehbar gelagert ist,
• mehrere Zinken (6), wobei die Zinken (6) an Zinkenhaltern (8) befestigt sind,
• Zinkenträger (9), mit denen die Zinkenhalter (8) am Endlosband (2) befestigt sind,
**dadurch gekennzeichnet, dass**
die Zinkenträger (9) jeweils eine Arretiervorrichtung (12) aufweisen, mit welcher im arretierten Zustand der jeweilige Zinkenhalter (8) die am Zinkenhalter (8) befestigten Zinken (6) in einer aufrechten Position arretiert, sodass sie an der Außenseite des Endlosbands (2) abstehen,
wobei an zumindest einer Drehwelle (4) eine Auslösevorrichtung (14) für die Arretiervorrichtung (12) vorgesehen ist, mit welcher die Arretiervorrichtung (12) lösbar ist sodass mit den Zinkenhaltern (8) die Zinken (6) in eine an das Endlosband angelegte Position überführbar sind.

2. Bandrechen nach Anspruch 1, **dadurch gekennzeichnet, dass** die Arretiervorrichtung (12) derart ausgebildet ist, dass sie selbsttätig in den arretierten Zustand übergeht, wenn die Auslösevorrichtung (14) von der Arretiervorrichtung (12) gelöst wird.

3. Bandrechen nach Anspruch 1 oder Anspruch 2, **dadurch gekennzeichnet, dass** die Arretiervorrichtung (12) im arretierten Zustand den Zinkenhalter (8) mittels einer Druckfeder (22) am Zinkenträger (8) arretiert, wobei die Auslösevorrichtung (14) eine Exzenterscheibe (20) umfasst, die an der Drehwelle (4) angeordnet ist und die mit einem Zapfen (25) am Zinkenträger (8) in Eingriff bringbar ist und die Druckfeder (22) drückt.

4. Bandrechen nach Anspruch 3, **dadurch gekennzeichnet, dass** der Arretiervorrichtung (12) eine Nocke (40) aufweist, wobei die Nocke (40) im gelösten Zustand entlang einer Führung (42) in der Arretiervorrichtung (12) bewegbar ist, wobei die Nocke (40) im arretierten Zustand in einer Nut (44) formschlüssig einrastbar ist.

5. Bandrechen nach einem der Ansprüche 1 bis 4, **dadurch gekennzeichnet, dass** zumindest zwei Räder (30) vorgesehen sind, wobei die Drehachse (d) der Räder (30) senkrecht zur Fahrtrichtung (F) des Bandrechens (1) angeordnet ist.

6. Bandrechen nach einem der Ansprüche 1 bis 5, **dadurch gekennzeichnet, dass** der Bandrechen (1) eine integrierte Antriebseinheit aufweist.

7. Bandrechen nach einem der Ansprüche 1 bis 6, **dadurch gekennzeichnet, dass** ein Seitenblech vorgesehen, welches parallel zur Fahrtrichtung (F) seitlich des Endlosbands (2) angeordnet ist.

8. Bandrechen nach einem der Ansprüche 3 bis 7, **dadurch gekennzeichnet, dass** ein an der Drehwelle (4) zwei beabstandete Exzenterscheiben (20) und zwei beabstandete Zapfen (25) am Zinkenträger (8) vorgesehen sind.

9. Bandrechen nach einem der Ansprüche 3 bis 8, **dadurch gekennzeichnet, dass** die Druckfeder (22) eine Spiralfeder mit einem in der Achse der Spiralfeder angeordneten Stift (24) aufweist.
